# EUROPEAN PATENT SPECIFICATION

(11) **EP 1 962 040 B1**
(45) Date of publication and mention of the grant of the patent: **10.03.2010**
(21) Application number: 07122529.6
(22) Date of filing: 06.12.2007
(51) Int. Cl.: F28D 1/053, B21D 53/08

(54) **Bend relief spacer**
Abstandshalter zur Biegeentlastung
Espaceur pour dégagement de flexion

(30) Priority: 23.02.2007 US 710191
(43) Date of publication of application: 27.08.2008
(73) Proprietor: Delphi Technologies, Inc., Troy, Michigan 48007 (US)
(72) Inventor: Samuelson, David E., Wheatfield, NY 14304 (US); Pautler, Donald R., Lockport, NY 14094 (US)
(74) Representative: Robert, Vincent

(56) References cited:
- EP-A- 1 840 493
- JP-A- 2004 218 852
- JP-A- 2005 090 806
- US-A- 3 781 960

## Description

### TECHNICAL FIELD

The subject invention relates to a core unit for a heat exchanger, and more specifically to a core unit having headers being spaced from one another with the centerlines thereof being parallel and extending through parallel bends.

### BACKGROUND OF THE INVENTION

Such core units generally include a pair of headers spaced from one another. A plurality of tubes is disposed between the headers to provide fluid communication between the headers. A plurality of fins is disposed between adjacent pairs of tubes for dissipating heat from the fluid in the tubes. The fins are generally formed from sheet metal into the shape of an accordion. The fins may be referred to as air fins, corrugated fins, or air centers. The fins may also be louvered, i.e., the fins have louvers defined therein to increase the heat transfer.

Variations of these core units are known to include bends for fitting into smaller, more compact space constraints, i.e., the headers have been bent about an axis spaced from and parallel to the tubes. However, the fins on the inner radius of the bend are frequently crushed during the bending process, resulting in decreased heat dissipation from these fins. The crushing of fins may also create stresses and/or damage or crimp the tubes, thereby decreasing the fluid flow between the headers of the core unit.

The US-A-2007 0227 695 discloses a core unit having headers bent about an axis spaced from and parallel to the tubes and presents one solution to these problems. Other heat exchanger assemblies having bent portions are disclosed in documents JP2005090806, which discloses the preamble of claim 1, and US3781960. This invention presents an alternative solution.

### SUMMARY OF THE INVENTION

The subject invention relates a heat exchanger assembly according to claim 1. This one comprises a core unit having headers spaced from one another with the centerlines thereof being parallel and extending through parallel bends. The invention is distinguished by a bend relief spacer disposed between two groups of tubes at the location of the bend and includes a first leg engaging an end tube of a first group, a second leg engaging an end tube of a second group, and at least one cross member interconnecting the legs.

The invention also includes a method of fabricating a heat exchange assembly according to claim 16. The legs of the bend relief spacer move angularly with respect to one another to prevent stresses from bending or crimping the end tubes or crushing the air fins during the process of bending the headers. The bend relief spacer facilitates the bend and ultimately maintains the performance of the core unit.

### BRIEF DESCRIPTION OF THE DRAWINGS

The present invention will be described by reference to the following detailed description when considered in connection with the accompanying drawings wherein:

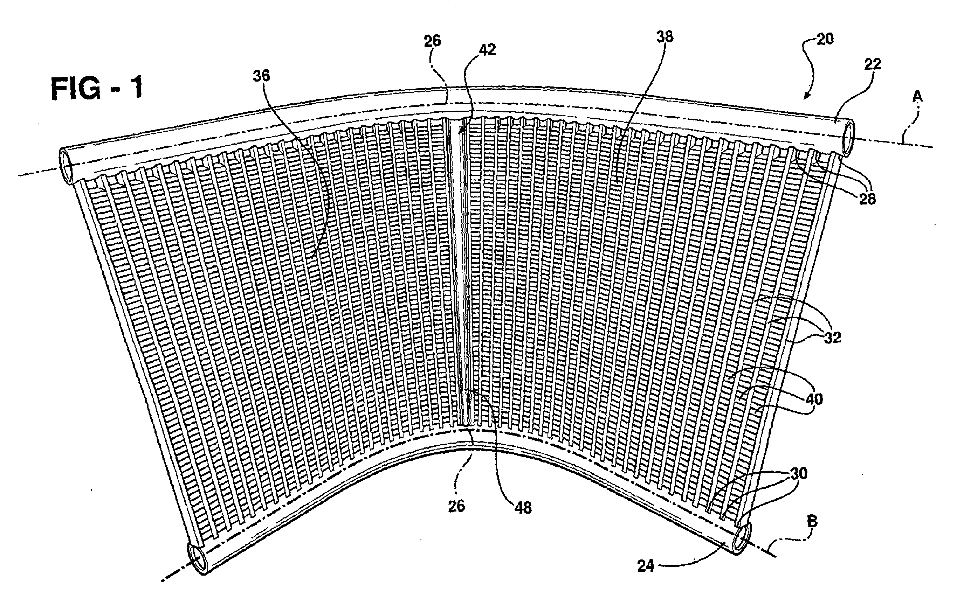

Figure 1 is a perspective view of the subject invention;

Figure 2 is a fragmentary perspective view of the bend relief spacer of the subject invention between adjacent groups of tubes and air fins;

Figure 3 is an end view of a second embodiment of the bend relief spacer;

Figure 4 is an end view of a third embodiment of the bend relief spacer;

Figure 5 is an end view of a fourth embodiment of the bend relief spacer;

Figure 6 is an end view of a fifth embodiment of the bend relief spacer; and

Figure 7 is an end view of a sixth embodiment of the bend relief spacer.

### DESCRIPTION OF THE PREFERRED EMBODIMENT

Referring to the Figures, wherein like numerals indicate corresponding parts throughout the several views, a heat exchanger assembly **20** generally shown includes an upper header **22** that extends along an upper centerline **A** and a lower header **24** that extends along a lower centerline **B.** The upper and lower headers **22, 24** are spaced from one another with the centerlines **A, B** thereof being parallel and extending through parallel bends **26.** The upper and lower headers **22, 24** are preferably of aluminum but any suitable material may be employed.

The upper header **22** defines a plurality of upper tube slots **28** being spaced along the upper centerline A, and the lower header **24** defines a plurality of lower tube slots **30** being spaced along the lower centerline **B.** The upper and lower tube slots **28, 30** are aligned with respect to one another, and a plurality of tubes **32** extend between the aligned upper and lower tube slots **28, 30.** The tubes **32** have a cross section defined by spaced flat sides and round ends. Each of the tubes **32** defines a plurality of fluid passages **34** being generally round in cross section for establishing fluid communication between the upper header **22** and the lower header **24.** The tubes **32** are preferably of aluminum but any suitable material may be employed.

The flat sides of adjacent tubes **32** are spaced from one another to define a plurality of air passages for the flow of air between the adjacent tubes **32.** The tubes **32** are disposed in a plurality of groups **36, 38** with the tubes **32** in each group having flat sides disposed in parallel relationship with one another. A corrugated air fin **40** is brazed between the parallel flat surfaces of the adjacent tubes **32** in each group. The air fin **40** extends between the lower and upper headers **24, 22** and preferably has louvers to increase the heat transfer from the fluid to the flow of air.

A first group **36** of tubes **32** is disposed along the centerlines **A, B** on one side of the parallel bends **26,** and a second group **38** of tubes **32** is disposed along the centerlines **A, B** on the other side of the parallel bends **26.** The flat sides of an end tube **32** of the first group **36** of tubes **32** diverge from the flat sides of an end tube **32** of the second group **38** to define a pie shaped gap between the first and second groups **36, 38** as viewed in cross section.

A bend relief spacer **42** is disposed in the pie shaped gap and extends between the upper and lower headers **22, 24.** The bend relief spacer **42** has a first leg **44** engaging the flat side of the end tube **32** of the first group **36** and a second leg **46** engaging the flat side of the end tube **32** of the second group **38.** The legs **44, 46** of the bend relief spacer **42** diverge from one another and at least one cross member **48** interconnects the legs **44, 46.** The heat exchanger assembly **20** may more than one bend relief spacer **42.**

As viewed in cross section, the legs **44, 46** have front and rear edges **50, 52** and feet **54** that extend along the edges **50, 52** to cradle the end tubes **32.** The feet **54** hold the bend relief spacer **42** in the pie shaped gap between the end tubes **32** of the first and second groups **36, 38** for brazing.

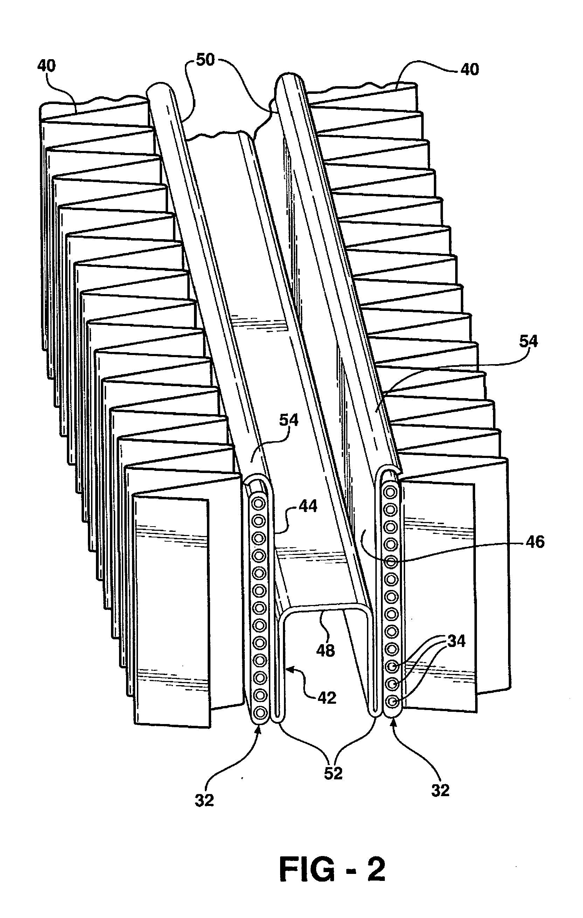

The bend relief spacer **42** shown in Figure 2 has a cross member **48** which, when viewed in cross section, is U-shaped and has arms integrally connected to and extending from the rear edges **52** toward the front edges **50** to an intermediate position therebetween. The cross member **48** also includes a base disposed at the intermediate position that extends between the arms.

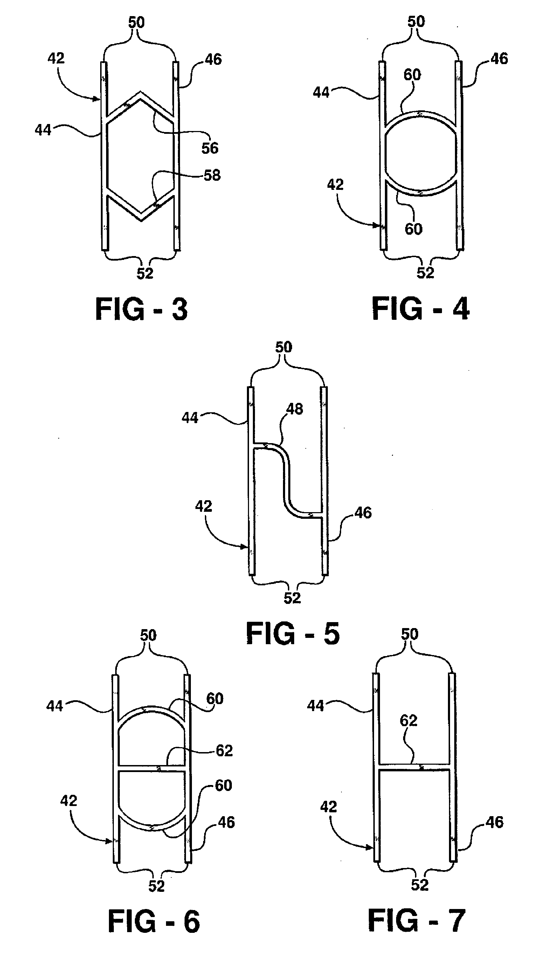

In the embodiment shown in Figure 3, the cross member **48,** when viewed in cross section, includes a front strut member **56** being V-shaped and having struts extending away from the front edges **50** in opposite directions from an apex. Each strut extends from the apex to the opposing legs **44, 46** of the bend relief spacer **42.** The cross member **48** also includes a rear strut member **58** being spaced between the front strut member **56** and the rear edges **52.** Like the front strut member **56,** the rear strut member **58** is V-shaped and has struts extending away from said rear edges **52** in opposite directions from an apex. Each strut extends from the apex to the opposing legs **44, 46** of the bend relief spacer **42.**

In the embodiment shown in Figure 4, the cross member **48,** when viewed in cross section, includes a front arc member **60** being arc-shaped and arcing toward the front edges **50** of the bend relief spacer **42** from the first leg **44** to the second leg **46.** The cross member **48** also includes a rear arc member **60** being arc-shaped and arcing toward the rear edges **52** of the bend relief spacer **42.**

In the embodiment shown in Figure 5, the cross member **48,** when viewed in cross section, extends in an S-shape between the legs **44, 46** of the bend relief spacer **42.**

In the embodiment shown in Figure 6, the cross member **48,** when viewed in cross section, includes a beam **62** disposed halfway between the front and rear edges **50, 52** and extending between the first and second legs **44, 46.** A front arc member **60** being arc-shaped is disposed halfway between the front edges **50** and the beam **62** and arcs toward the front edges **50** from the first leg **44** to the second leg **46.** A rear arc member **60** being arc-shaped is disposed halfway between the rear edges **52** and the beam **62** and arcs toward the rear edges **52** from the first leg **44** to the second leg **46.**

In the embodiment shown in Figure 7, the cross member **48,** when viewed in cross section, is a beam **62** disposed halfway between the front and rear edges **50, 52** and extending between the first and second legs **44, 46** of the bend relief spacer **42.**

Accordingly, the invention also includes a method of fabricating a heat exchanger assembly **20.** The method begins by forming a plurality of upper apertures having a cross section defined by flat sides interconnected by round ends in an upper header **22** to define a plurality of upper tube slots **28.** The method continues with forming a plurality of lower apertures in a lower header **24** having the same spacing and cross section as the upper apertures to define a plurality of lower tube slots **30** corresponding with the upper tube slots **28.**

The method continues by forming a plurality of tubes **32** having upper and lower ends and having a tube cross section defined by flat sides interconnected by rounded ends. The tubes **32** and headers **22, 24** are interconnected by inserting the upper ends of the tubes **32** into the upper tube slots **28** and inserting the lower ends of the tubes **32** into the corresponding lower tube slots **30** and to define a plurality of air gaps between the flat sides of the tubes **32.** The method continues by inserting an air fin **40** in each of the air gaps between tubes **32** in first and second groups **36, 38** of tubes **32** to engage the flat sides of adjacent tubes **32** and extending between the headers **22, 24.**

The method proceeds by inserting a bend relief spacer **42** having first and second legs **44, 46** and at least one cross member **48,** and engaging the first and second legs **44, 46** of the bend relief spacer **42** with the flat sides of the adjacent end tubes **32** of the first and second groups **36, 38.** The tubes **32,** air fins **40,** and bend relief spacer **42** are made into one integral heat exchanger by brazing the plurality of tubes **32** to the upper and lower headers **22, 24** and brazing the air fins **40** and bend relief spacers **42** to the flat sides of the tubes **32.** The method is finished by bending the upper and lower headers **22, 24** to define at least one bend **26** separating the first group **36** of tubes **32** from the second group **38** of tubes **32,** and moving the legs **44, 46** of the bend relief spacer **42** angularly with respect to each other about a pivot point defined by the cross member **48** to maintain the legs **44, 46** in engagement with the flat sides of the end tubes 32 of the first and second groups **36, 38.**

## Claims

1. A heat exchanger assembly **(20)** comprising;
an upper header **(22)** extending along an upper centerline **(A),**
a lower header **(24)** extending along a lower centerline **(B),**
said headers **(22, 24)** being spaced from one another with said centerlines **(A, B)** thereof being parallel and extending through parallel bends **(26),**
said upper header **(22)** defining a plurality of upper tube slots **(28)** being spaced along said upper centerline **(A),**
said lower header **(24)** defining a plurality of lower tube slots **(30)** being spaced along said lower centerline **(B)** and aligned with said upper tube slots **(28),**
a plurality of tubes **(32)** extending between said upper and lower tube slots **(28, 30)** and disposed in first and second groups **(36, 38),** wherein said tubes **(32)** have a cross section defining spaced flat sides, wherein the flat sides of said tubes **(32)** in each group are disposed in parallel relationship to one another,
said first group **(36)** of tubes **(32)** is disposed along said centerlines **(A, B)** on one side of said bends **(26)** and said second group **(38)** of tubes **(32)** is disposed along said centerlines **(A, B)** on the other side of said bends **(26)** so that said flat sides of the end tube **(32)** of said first group **(36)** of tubes **(32)** diverge from said flat sides of the end tube **(32)** of said second group **(38)** of tubes **(32)** to define pie shaped gaps between said first and second groups **(36, 38)** as viewed in cross section.
an air fin **(40)** disposed between and engaging adjacent tubes **(32)** in each of said groups **(36, 38)** and extending between said upper and lower headers **(22, 24),**
**characterized in that** a bend relief spacer **(42)** is disposed between the end tubes **(32)** of adjacent groups **(36, 38)** and has a first leg **(44)** engaging the end tube **(32)** of said first group **(36)** and a second leg **(46)** engaging the end tube **(32)** of said second group **(38)** and at least one cross member **(48)** interconnecting said legs **(44, 46),** and **in that** the legs **(44, 46)** have front and rear edges **(50, 52)** as viewed in cross section and feet **(54)** that extend along the edges **(50, 52)** to cradle the end tubes **(32),** the feet **(54)** holding the bend relief spacer **(42)** in the pie shaped gap between the end tubes **(32)** of the first and second groups **(36, 38)** for brazing.

2. An assembly as set forth in claim 1 wherein said tubes **(32)** have a cross section defining spaced flat sides and rounded ends.

3. An assembly as set forth in claim 2 including feet **(54)** extending along and from said edges **(50, 52)** of said legs **(44, 46)** to cradle the rounded ends of said end tubes **(32)** for brazing.

4. An assembly as set forth in claim 1 wherein said cross section of said cross member **(48)** includes at least one beam **(62)** being straight.

5. An assembly as set forth in claim 4 wherein said cross member **(48)** is a beam (62) extending between said first and second legs **(44, 46)** and being disposed halfway between said front and rear edges **(50, 52).**

6. An assembly as set forth in claim 1 wherein said cross member **(48)** includes a front strut member **(56)** being V-shaped and having struts extending away from said front edges **(50)** in opposite directions from an apex to said first and second legs **(44, 46)** of said bend relief spacer **(42),** and
a rear strut member **(58)** being spaced between said front strut member **(56)** and said rear edges **(52)** and being V-shaped and having struts extending away from said rear edges **(52)** in opposite directions from an apex to said first and second legs **(44, 46)** of said bend relief spacer **(42).**

7. An assembly as set forth in claim 1 wherein said cross section of said cross member **(48)** includes at least one arc member **(60)** being curved.

8. An assembly as set forth in claim 7 wherein said cross section of said cross member **(48)** includes a U-shape having arms integrally connected to and extending from said rear edges **(52)** toward said front edges **(50)** to an intermediate position therebetween and a base extending between said arms and said intermediate position.

9. An assembly as set forth in claim 7 wherein said arc member **(60)** of said bend relief spacer **(42)** extends in an S-shape between said legs **(44, 46)** of said bend relief spacer **(42).**

10. An assembly as set forth in claim 7 including a front arc member **(60)** being arc-shaped and arcing toward said front edges **(50)** of said bend relief spacer **(42)** from said first leg **(44)** to said second leg **(46),** and
a rear arc member **(60)** being arc-shaped and arcing toward said rear edges **(52)** of said bend relief spacer **(42)** from said first leg **(44)** to said second leg **(46).**

11. An assembly as set forth in claim 1 wherein said cross section of said cross member **(48)** includes at least one arc member **(60)** being curved and at least one beam **(62)** being straight.

12. An assembly as set forth in claim 11 wherein said beam **(62)** extends orthogonally between said first and second legs **(44, 46)** and is disposed halfway between said front and rear edges **(50, 52),**
a front arc member **(60)** disposed halfway between said front edges **(50)** and said beam **(62),**
said front arc member **(60)** being arc-shaped and arcing toward said front edges **(50)** from said first leg **(44)** to said second leg **(46),**
a rear arc member **(60)** disposed halfway between said rear edges **(52)** and said beam **(62),**
said rear arc member **(60)** being arc-shaped and arcing toward said rear edges **(52)** from said first leg **(44)** to said second leg **(46).**

13. An assembly as set forth in claim 1 wherein said bend relief spacer **(42)** extends between said lower header **(24)** and said upper header **(22).**

14. An assembly as set forth in claim 1 wherein said tubes **(32)** define a plurality of fluid passages **(34)** each being generally round in cross section for establishing fluid communication between said upper and lower headers **(22, 24).**

15. An assembly as set forth in claim 1 wherein said air fins **(40)** are corrugated for dissipating heat from said tubes **(32).**

16. A method of fabricating a heat exchanger assembly **(20)** comprising the steps of;
forming a plurality of upper apertures having a cross section defined by flat sides interconnected by round ends in an upper header **(22)** to define a plurality of upper tube slots **(28),**
forming a plurality of lower apertures having the same spacing and cross section as the upper apertures in a lower header **(24)** to define a plurality of lower tube slots **(30)** corresponding with the upper tube slots **(28),**
forming a plurality of tubes **(32)** having upper and lower ends and having a tube **(32)** cross section defined by flat sides interconnected by rounded ends,
inserting the upper ends of the plurality of tubes **(32)** into the upper tube slots **(28)** of the upper header **(22)** and inserting the lower ends of the tubes **(32)** into the corresponding lower tube slots **(30)** in the lower header **(24)** to establish fluid communication between the upper and lower headers **(22, 24)** and to define a plurality of air gaps between the flat sides of the tubes **(32),**
inserting an air fin **(40)** in each of the air gaps between tubes **(32)** in a first group **(36)** of tubes **(32)** to engage the flat sides of adjacent tubes **(32)** and extending between the headers **(22, 24),**
inserting an air fin **(40)** in each of the air gaps between tubes **(32)** in a second group **(38)** of tubes **(32)** to engage the flat sides of adjacent tubes **(32)** and extending between the headers **(22, 24),**
inserting a bend relief spacer **(42)** having first and second legs **(44, 46)** and a cross member **(48)** for allowing the legs **(44, 46)** to move angularly with respect to each other in the air gap between the adjacent end tubes **(32)** of the first and second groups **(36, 38),** the legs **(44, 46)** having front and rear edges **(50, 52)** as viewed in cross section and feet **(54)** that extend along the edges **(50, 52)** to cradle the end tubes **(32),**
engaging the first and second legs **(44, 46)** of the bend relief spacer **(42)** with the flat sides of the adjacent end tubes **(32)** of the first and second groups **(36, 38),**
holding the bend relief spacer **(42)** in the gap between the end tubes **(32)** of the first and second groups **(36, 38)** thanks to the feet **(54),**
brazing the plurality of tubes **(32)** to the upper and lower headers **(22, 24)** and brazing the air fms **(40)** and bend relief spacers **(42)** to the flat sides of the tubes **(32)** to form one integral heat exchanger, and
bending the upper and lower headers **(22, 24)** to define at least one bend **(26),**
rotating the legs **(44, 46)** of the bend relief spacer **(42)** about a pivot point defined by the cross member **(48)** to maintain the legs **(44, 46)** in engagement with the flat sides of the end tubes **(32)** of the first and second groups **(36,38).**

## Patentansprüche

1. Wärmetauscheraufbau (20), der aufweist:
einen oberen Verteiler (22), der sich entlang einer oberen Mittelachse (A) erstreckt,
einen unteren Verteiler (24), der sich entlang einer unteren Mittelachse (B) erstreckt,
wobei die Verteiler (22, 24) voneinander mit Abstand angeordnet sind, wobei deren Mittelachsen (A, B) parallel sind und sich durch parallele Biegungen (26) erstrecken,
wobei der obere Verteiler (22) eine Vielzahl von oberen Rohrschlitzen (28) definiert, die mit Abstand entlang der oberen Mittelachse (A) angeordnet sind,
wobei der untere Verteiler (24) eine Vielzahl von unteren Rohrschlitzen (30) definiert, die mit Abstand entlang der unteren Mittelachse (B) angeordnet sind und mit den oberen Rohrschlitzen (28) ausgerichtet sind,
eine Vielzahl von Rohren (32), die sich zwischen den oberen und unteren Rohrschlitzen (28, 30) erstrecken und in ersten und zweiten Gruppen (36, 38) angeordnet sind, wobei die Rohre (32) einen Querschnitt haben, der beabstandete abgeflachte Seiten definiert, wobei die abgeflachten Seiten der Rohre (32) in jeder Gruppe parallel zueinander angeordnet sind,
wobei die erste Gruppe (36) von Rohren (32) entlang der Mittelachsen (A, B) an einer Seite der Biegungen (26) angeordnet ist und die zweite Gruppe (38) von Rohren (32) entlang der Mittelachsen (A, B) an der anderen Seite der Biegungen (26) angeordnet ist, so dass die abgeflachten Seiten des Endrohrs (32) der ersten Gruppe (36) von Rohren (32) von den abgeflachten Seiten des Endrohrs (32) der zweiten Gruppe (38) von Rohren (32) divergieren, um keilförmige Lücken zwischen den ersten und zweiten Gruppen (36, 38) bei Betrachtung im Querschnitt zu definieren,
eine Luftrippe (40), die zwischen angrenzenden Rohren (32) in jeder der Gruppen (36, 38) angeordnet ist und mit diesen in Kontakt steht und sich zwischen den oberen und unteren Verteilern (22, 24) erstreckt,
**dadurch gekennzeichnet, dass** ein Biegungsentlastung-Abstandshalter (42) angeordnet ist zwischen den Endrohren (32) von angrenzenden Gruppen (36, 38) und einen ersten Abschnitt (44) hat, der das Endrohr (32) der ersten Gruppe (36) kontaktiert, und einen zweiten Abschnitt (46) hat, der das Endrohr (32) der zweiten Gruppe (38) kontaktiert, und zumindest ein Querelement (48) hat, das die beiden Abschnitte (44, 46) miteinander verbindet, und **dadurch**, dass die
Abschnitte (44, 46) vordere und hintere Kanten (50, 52) haben, im Querschnitt betrachtet, und Fußteile (54), die sich entlang der Kanten (50, 52) erstrecken, um die Endrohre (32) zu umfassen, wobei die Fußteile (54) den Biegungsentlastung-Abstandshalter (42) in der keilförmigen Lücke zwischen den Endrohren (32) der ersten und zweiten Gruppen (36, 38) halten für Lötzwecke.

2. Aufbau gemäß Anspruch 1, wobei die Rohre (32) einen Querschnitt haben, der beabstandete abgeflachte Seiten und abgerundete Enden definiert.

3. Aufbau gemäß Anspruch 2, mit Fußteilen (54), die sich entlang und von den Kanten (50, 52) der Abschnitte (44, 46) erstrecken, um die abgerundeten Enden der Endrohre (32) zum Löten zu halten.

4. Aufbau gemäß Anspruch 1, wobei der Querschnitt des Querelements (48) zumindest einen geraden Träger (62) aufweist.

5. Aufbau gemäß Anspruch 4, wobei das Querelement (48) ein Träger (62) ist, der sich zwischen den ersten und zweiten Abschnitten (44, 46) erstreckt und mittig zwischen den vorderen und hinteren Kanten (50, 52) angeordnet ist.

6. Aufbau gemäß Anspruch 1, wobei das Querelement (48) ein vorderes Strebenelement (56) umfasst, das V-förmig ist und Streben hat, die sich weg erstrecken von den vorderen Kanten (50) in entgegengesetzte Richtungen von einer Spitze zu den ersten und zweiten Abschnitten (44, 46) des Biegungsentlastung-Abstandshalters (42), und
ein hinteres Strebenelement (58), das beabstandet zwischen dem vorderen Strebenelement (56) und den hinteren Kanten (52) vorgesehen ist und V-förmig ist und Streben hat, die sich weg erstrecken von den hinteren Kanten (52) in den entgegengesetzte Richtungen von einer Spitze zu den ersten und zweiten Abschnitten (44, 46) des Biegungsentlastung-Abstandshalters (42).

7. Aufbau gemäß Anspruch 1, wobei der Querschnitt des Querelements (48) zumindest ein bogenförmiges Bogenelement (60) umfasst.

8. Aufbau gemäß Anspruch 7, wobei der Querschnitt des Querelements (48) eine U-Form umfasst mit Armen, die integral mit den hinteren Kanten (52) verbunden sind und sich von den hinteren Kanten (52) in Richtung zu den vorderen Kanten (50) erstrecken bis zu einer dazwischenliegenden Zwischenposition, und eine Basis, die sich zwischen den Armen und der Zwischenposition erstreckt.

9. Aufbau gemäß Anspruch 7, wobei sich das Bogenelement (60) des Biegungsentlastung-Abstandshalters (42) in einer S-Form zwischen den Abschnitten (44, 46) des Biegungsentlastung-Abstandshalters (42) erstreckt.

10. Aufbau wie im Anspruch 7, mit einem vorderen Bogenelement (60), das bogenförmig ist und in Richtung zu den vorderen Kanten (50) des Biegungsentlastung-Abstandshalters (42) von dem ersten Abschnitt (44) zu dem zweiten Abschnitt (46) einen Bogen bildet, und
ein hinteres Bogenelement (60), das bogenförmig ist und in Richtung zu den hinteren Kanten (52) des Biegungsentlastung-Abstandshalters (42) von dem ersten Abschnitt (44) zu dem zweiten Abschnitt (46) einen Bogen bildet.

11. Aufbau gemäß Anspruch 1, wobei der Querschnitt des Querelements (48) zumindest ein Bogenelement (60), das bogenförmig ist, und zumindest einen Träger (62) umfasst, der gerade ist.

12. Aufbau gemäß Anspruch 11, wobei sich der Träger (62) orthogonal zwischen den ersten und zweiten Abschnitten (44, 46) erstreckt und mittig zwischen den vorderen und hinteren Kanten (50, 52) angeordnet ist,
ein vorderes Bogenelement (60) mittig zwischen den vorderen Kanten (50) und dem Träger (62) angeordnet ist,
wobei das vordere Bogenelement (60) bogenförmig ist und in Richtung zu den vorderen Kanten (50) von dem ersten Abschnitt (44) zu dem zweiten Abschnitt (46) einen Bogen bildet,
ein hinteres Bogenelement (60) mittig zwischen den hinteren Kanten (52) und dem Träger (62) angeordnet ist,
wobei das hinteres Bogenelement (60) bogenförmig ist und in Richtung zu den hinteren Kanten (52) von dem ersten Abschnitt (44) zu dem zweiten Abschnitt (46) einen Bogen bildet.

13. Aufbau gemäß Anspruch 1, wobei sich der Biegungsentlastung-Abstandshalter (42) zwischen dem unteren Verteiler (24) und dem oberen Verteiler (22) erstreckt.

14. Aufbau gemäß Anspruch 1, wobei die Rohre (32) eine Vielzahl von Fluid-Durchlässen (34) definieren, die jeweils im Allgemeinen im Querschnitt rund sind, zum Herstellen einer Fluid-Verbindung zwischen den unteren und oberen Verteilern (22, 24).

15. Aufbau gemäß Anspruch 1, wobei die Luftrippen (40) geriffelt bzw. gewellt sind zum Ableiten von Wärme von den Rohren (32).

16. Verfahren zur Herstellung eines Wärmetauscheraufbaus (20), das die Schritte aufweist:
Bilden einer Vielzahl von oberen Öffnungen mit einem Querschnitt, der durch abgeflachte Seiten definiert wird, verbunden durch abgerundete Enden in einem oberen Verteiler (22), um eine Vielzahl von oberen Rohrschlitzen (28) zu definieren,
Bilden einer Vielzahl von unteren Öffnungen mit demselben Abstand und Querschnitt wie die oberen Öffnungen in einem unteren Verteiler (24), um eine Vielzahl von unteren Rohrschlitzen (30) zu definieren, die den oberen Rohrschlitzen (28) entsprechen,
Bilden einer Vielzahl von Rohren (32), die obere und untere Enden haben und einen Rohr(32)-Querschnitt haben, der durch abgeflachte Seiten, verbunden durch abgerundete Enden, definiert wird,
Einfügen der oberen Enden der Vielzahl von Rohren (32) in die oberen Rohrschlitze (28) des oberen Verteilers (22) und Einführen der unteren Enden der Rohre (32) in die entsprechenden unteren Rohrschlitze (30) in dem unteren Verteiler (24), um eine Fluid-Verbindung zwischen den oberen und unteren Verteilern (22, 24) herzustellen und eine Vielzahl von Luftlücken zwischen den abgeflachten Seiten der Rohre (32) zu definieren,
Einfügen einer Luftrippe (40) in jede der Luftlücken zwischen Rohren (32) in einer ersten Gruppe (36) von Rohren (32), um die abgeflachten Seiten von angrenzenden Rohren (32) in Eingriff zu bringen, und sich zwischen den Verteilern (22, 24) erstreckend,
Einfügen einer Luftrippe (40) in jede der Luftlücken zwischen Rohren (32) in einer zweiten Gruppe (38) von Rohren (32), um die abgeflachten Seiten von angrenzenden Rohren (32) in Eingriff zu bringen, und sich zwischen den Verteilern (22, 24) erstreckend,
Einfügen eines Biegungsentlastung-Abstandshalters (42) mit ersten und zweiten Abschnitten (44, 46) und einem Querelement (48), damit sich die Abschnitte (44, 46) eckig zueinander in der Luftlücke zwischen den angrenzenden Endrohren (32) der ersten und zweiten Gruppen (36, 38) bewegen können, wobei die Abschnitte (44, 46) vordere und hintere Kanten (50, 52) haben, im Querschnitt betrachtet, und Fußteile (54), die sich entlang der Kanten (50, 52) erstrecken, um die Endrohre (32) zu umfassen,
in Eingriff bringen der ersten und zweiten Abschnitte (44, 46) des Biegungsentlastung-Abstandshalters (42) mit den abgeflachten Seiten der angrenzenden Endrohre (32) der ersten und zweiten Gruppen (36, 38),
Halten des Biegungsentlastung-Abstandshalters (42) in der Lücke zwischen den Endrohren (32) der ersten und zweiten Gruppen (36, 38) aufgrund der Fußteile (54),
Löten der Vielzahl von Rohren (32) an die oberen und unteren Verteiler (22, 24) und Löten der Luftrippen (40) und Biegungsentlastung-Abstandshalter (42) an die abgeflachten Seiten der Rohre (32), um einen integralen Wärmetauscher zu bilden, und
Biegen der oberen und unteren Verteiler (22, 24), um zumindest eine Biegung (26) zu definieren,
Rotieren der Abschnitte (44, 46) des Biegungsentlastung-Abstandshalters (42) um einen Drehpunkt, der durch das Querelement (48) definiert wird, um die Abschnitte (44, 46) in Eingriff mit den abgeflachten Seiten der Endrohre (32) der ersten und zweiten Gruppen (36, 38) zu halten.

## Revendications

1. Ensemble échangeur de chaleur (20) comprenant :
un collecteur supérieur (22) s'étendant le long d'une ligne centrale supérieure (A),
un collecteur inférieur (24) s'étendant le long d'une ligne centrale inférieure (B),
lesdits collecteurs (22, 24) étant espacés l'un de l'autre avec leurs lignes centrales (A, B) parallèles et s'étendant suivant des coudes parallèles (26),
ledit collecteur supérieur (22) définissant une pluralité de fentes à tubes supérieures (28) qui sont espacées le long de ladite ligne centrale supérieure (A),
ledit collecteur inférieur (24) définissant une pluralité de fentes à tubes inférieures (30) qui sont espacées le long de ladite ligne centrale inférieure (B) et alignées avec lesdites fentes à tubes supérieures (28),
une pluralité de tubes (32) s'étendant entre lesdites fentes à tubes supérieures et lesdites fentes à tubes inférieures (28, 30) et disposées dans un premier et un second groupe (36, 38), tels que lesdits tubes (32) ont une section transversale définissant des côtés plats espacés, de sorte que les côtés plats desdits tubes (32) dans chaque groupe sont disposés en relation parallèle les uns aux autres,
ledit premier groupe (36) de tubes (32) est disposé le long desdites lignes centrales (A, B) sur un côté desdits coudes (26), et ledit second groupe (38) de tubes (32) est disposé le long desdites lignes centrales (A, B) sur l'autre côté desdits coudes (26) de telle façon que lesdits côtés plats du tube terminal (32) dudit premier groupe (36) de tubes (32) divergent depuis lesdits côtés plats du tube terminal (32) dudit second groupe (38) de tubes (32) pour définir des intervalles en forme de parts de gâteau entre lesdits premier et second groupes (36, 38), vus en section transversale,
une ailette à air (40) disposée entre et en engagement avec des tubes adjacents (32) dans chacun desdits groupes (36, 38) et s'étendant entre lesdits collecteurs supérieur et inférieur (22, 24),
**caractérisé en ce qu'**un écarteur de soulagement de flexion (42) est disposé entre les tubes terminaux (32) de groupes adjacents (36, 38) et possède une première jambe (44) qui engage le tube terminal (32) dudit premier groupe (36) et une seconde jambe (46) qui engage le tube terminal (32) dudit second groupe (38) et au moins un élément transversal (48) qui interconnecte lesdites jambes (44, 46), et
**en ce que** les jambes (44, 46) possèdent des bords avant et arrière (50, 52), tels que vus en section transversale, et des pieds (54) qui s'étendent le long des bords (50, 52) pour loger les tubes terminaux (32) les pieds (54) tenant l'écarteur de soulagement de flexion (42) dans l'intervalle en forme de part de gâteau entre les tubes terminaux (32) du premier et du second groupe (36, 38) pour le brasage.

2. Ensemble selon la revendication 1, dans lequel lesdits tubes (32) ont une section transversale définissant des côtés plats espacés et des extrémités arrondies.

3. Ensemble selon la revendication 2, incluant des pieds (54) s'étendant le long de et depuis lesdits bords (50, 52) desdites jambes (44, 46) pour loger les extrémités arrondies desdits tubes terminaux (32) pour le brasage.

4. Ensemble selon la revendication 1, dans lequel ladite section transversale dudit élément transversal (48) inclut au moins une poutre (62) qui est droite.

5. Ensemble selon la revendication 4, dans lequel ledit élément transversal (48) est une poutre (62) s'étendant entre ladite première jambe et ladite seconde jambe (44, 46) et étant disposée à mi-chemin entre ledit bord avant et ledit bord arrière (50, 52).

6. Ensemble selon la revendication 1, dans lequel ledit élément transversal (48) inclut un élément entretoise avant (56) en forme de V et ayant des entretoises s'étendant en éloignement depuis lesdits bords avant (50) dans des directions opposées depuis un sommet vers ladite première et ladite seconde jambe (44, 46) dudit écarteur de soulagement de flexion (42), et
un élément entretoise arrière (58) espacé entre ledit élément entretoise avant (56) et lesdits bords arrière (52), en forme de V et ayant des entretoises s'étendant en éloignement depuis lesdits bords arrière (52) dans des directions opposées depuis un sommet vers ladite première et ladite seconde jambe (44, 46) dudit écarteur de soulagement de flexion (42).

7. Ensemble selon la revendication 1, dans lequel ladite section transversale dudit élément transversal (48) inclut au moins un élément en arc (60) qui est incurvé.

8. Ensemble selon la revendication 7, dans lequel ladite section transversale dudit élément transversal (48) inclut une forme en U ayant des bras intégralement connectés à et s'étendant depuis lesdits bords arrière (52) vers lesdits bords avant (50), vers une position intermédiaire entre ceux-ci, et une base s'étendant entre lesdits bras et ladite position intermédiaire.

9. Ensemble selon la revendication 7, dans lequel ledit élément en arc (60) dudit écarteur de soulagement de flexion (42) s'étend sous une forme en S entre lesdites jambes (44, 46) dudit écarteur de soulagement de flexion (42).

10. Ensemble selon la revendication 7, incluant un élément en arc avant (60) qui présente une forme en arc cintré vers lesdits bords avant (50) dudit écarteur de soulagement de flexion (42) depuis ladite première jambe (44) vers ladite seconde jambe (46), et
un élément en arc arrière (60) qui présente une forme en arc cintré vers les bords arrière (52) dudit écarteur de soulagement de flexion (42) depuis ladite première jambe (44) vers ladite seconde jambe (46).

11. Ensemble selon la revendication 1, dans lequel ladite section transversale dudit élément transversal (48) inclut au moins un élément en arc (60) incurvé, et au moins une poutre (62) droite.

12. Ensemble selon la revendication 11, dans lequel ladite poutre (62) s'étend perpendiculairement entre ladite première et ladite seconde jambe (44, 46) et est disposée à mi-chemin entre lesdits bords avant et arrières (50, 52),
un élément en arc avant (60) disposé à mi-chemin entre lesdits bords avant (50) et ladite poutre (62),
ledit élément en arc avant (60) présentant une forme en arc cintré vers lesdits bords avant (50) depuis ladite première jambe (44) vers ladite seconde jambe (46),
un élément en arc arrière (60) disposé à mi-chemin entre lesdits bords arrière (52) et ladite poutre (62),
ledit élément en arc arrière (60) ayant une forme en arc cintré vers lesdits bords arrière (52) depuis ladite première jambe (44) vers ladite seconde jambe (46).

13. Ensemble selon la revendication 1, dans lequel ledit écarteur de soulagement de flexion (42) s'étend entre ledit collecteur inférieur (24) et ledit collecteur supérieur (22).

14. Ensemble selon la revendication 1, dans lequel lesdits tubes (32) définissent une pluralité de passages à fluide (34) ayant chacun une section transversale généralement arrondie, pour établir une communication fluidique entre ledit collecteur supérieur et ledit collecteur inférieur (22, 24).

15. Ensemble selon la revendication 1, dans lequel lesdites ailettes à air (40) sont ondulées pour dissiper la chaleur provenant desdits tubes (32).

16. Procédé pour fabriquer un ensemble échangeur de chaleur (20) comprenant les étapes consistant à :
former une pluralité d'ouvertures supérieures ayant une section transversale définie par des côtés plats interconnectés par des extrémités arrondies dans un collecteur supérieur (22) pour définir une pluralité de fentes à tubes supérieures (28),
former une pluralité d'ouvertures inférieures ayant le même espacement et la même section transversale que les ouvertures supérieures dans un collecteur inférieur (24) pour définir une pluralité de fentes à tubes inférieures (30) qui correspondent aux fentes à tubes supérieures (28),
former une pluralité de tubes (32) ayant des extrémités supérieure et inférieure et ayant un tube (32) dont la section transversale est définie par des côtés plats interconnectés par des extrémités arrondies,
introduire les extrémités supérieures de la pluralité de tubes (32) dans les fentes à tubes supérieures (28) du collecteur supérieur (22) et insérer les extrémités inférieures des tubes (32) dans les fentes à tubes inférieures correspondantes (30) dans le collecteur inférieur (24) pour établir une communication fluidique entre le collecteur supérieur et le collecteur inférieur (22, 24) et pour définir une pluralité d'intervalles d'air entre les côtés plats des tubes (32),
introduire une ailette à air (40) dans chacun des intervalles d'air entre des tubes (32) dans un premier groupe (36) de tubes (32) pour engager les côtés plats de tubes adjacents (32) et s'étendant entre les deux collecteurs (22, 24),
introduire une ailette à air (40) dans chacun des intervalles d'air entre des tubes (32) dans un second groupe (38) de tubes (32) pour engager les côtés plats de tubes adjacents (32) et s'étendant entre les deux collecteurs (22, 24),
introduire un écarteur de soulagement de flexion (42) ayant une première et une seconde jambe (44, 46) et un élément transversal (48) pour permettre aux jambes (44, 46) de se déplacer de manière angulaire les unes par rapport aux autres dans l'intervalle d'air entre les tubes terminaux adjacents (32) du premier et du second groupe (36, 38), les jambes (44, 46) ayant des bords avant et arrière (50, 52), telles qu'on les voit en section transversale, et des pieds (54) qui s'étendent le long des bords (50, 52) pour loger les tubes terminaux (32),
engager la première et la seconde jambe (44, 46) de l'écarteur de soulagement de flexion (42) avec les côtés plats des tubes terminaux adjacents (32) du premier et du second groupe (36, 38),
tenir l'écarteur de soulagement de flexion (42) dans l'intervalle entre les tubes terminaux (32) du premier et du second groupe (36, 38) grâce aux pieds (54),
braser la pluralité de tubes (32) sur le collecteur supérieur et le collecteur inférieur (22,24) et braser les ailettes à air (40) et les écarteurs de soulagement de flexion (42) sur les côtés plats des tubes (32) pour former un échangeur de chaleur intégré, et
faire fléchir le collecteur supérieur et le collecteur inférieur (22, 24) pour définir au moins un cintrage (26),
faire tourner les jambes (44, 46) de l'écarteur de soulagement de flexion (42) autour d'un point de pivotement défini par l'élément transversal (48) pour maintenir les jambes (44, 46) en engagement avec les côtés plats des tubes terminaux (32) du premier et du second groupe (36, 38).
